# EUROPEAN PATENT SPECIFICATION

(11) **EP 4 111 280 B1**
(45) Date of publication and mention of the grant of the patent: **01.07.2026**
(21) Application number: 21703804.1
(22) Date of filing: 26.01.2021
(51) Int. Cl.: G05B 23/02, F03D 17/00

(54) **METHOD FOR AN AT LEAST PARTIALLY DECENTRALIZED CALCULATION OF THE STATE OF HEALTH OF AT LEAST ONE WIND TURBINE**
VERFAHREN ZUM MINDESTENS TEILWEISE DEZENTRALEN BERECHNEN DES GESUNDHEITSZUSTANDES VON MINDESTENS EINER WINDTURBINE
PROCÉDÉ DE CALCUL AU MOINS PARTIELLEMENT DÉCENTRALISÉ DE L'ÉTAT DE SANTÉ D'AU MOINS UNE ÉOLIENNE

(30) Priority: 27.02.2020 AT 501462020
(43) Date of publication of application: 04.01.2023
(73) Proprietor: SkySpecs, Inc., Ann Arbor, MI 48104 (US)
(72) Inventor: GRAY, Christopher, 8010 Graz (AT)
(74) Representative: Patentanwaltskanzlei Matschnig & Forsthuber OG
(86) International application number: PCT/AT2021/060025
(87) International publication number: WO 2021/168490

(56) References cited:
- WO-A2-2012/130244
- CN-A- 108 518 315
- US-A1- 2011 082 597

## Description

### Field of the invention and description of prior art

Achieving the maximum availability of an operational wind turbine despite a large number of potential failure modes is a challenging task. An optimum level of maintenance must be performed in order to prevent technical failures and minimise down-time, whilst also minimizing the costs for maintenance. Decisions concerning proactive maintenance can be supported by remote monitoring. Development of widely interconnected information networks and intelligent devices collecting a range of technical information provides the operators of wind turbine fleets with large volumes of data that typically comprises wind speeds, rotor speeds, oil temperatures of the gear of the wind turbine, vibration data, energy output, generator voltage, etc.

Not surprisingly, this data flows continuously and is centrally connected at a processing unit, said processing unit therefore accessing "big data" and being optimized to recognize patterns in order to provide an optimal estimation of the state of health of a wind turbine.

The document US 2011/082597 A1 relates to real-time monitoring and optimization of microgrid electrical systems and describes:
- A real-time model and a virtual model of an electrical system to optimize distributed energy resources.
- Data acquisition from two- or more sensors to assess system health.
- A decision engine and analytics engine to predict failures and optimize system performance.
- A network optimization simulation engine for optimizing energy generation, reliability, and cost.

While the system in US 2011/082597 A1 involves a decentralized data acquisition system for predictive analysis, it does not disclose a distributed network of decentralized nodes.

### Summary of the invention

While in theory central processing of all the available data sounds superior, several practical problems arise during implementation of a centrally organized data calculation system. First, the collection of big data causes huge volumes of data flow which demands significant levels of bandwidth from the information network. Second, continuously collecting an increasing amount of data leads to a difficulties in the time accurate allocation of the data. Since the data sources are frequently different sensors located in different wind turbines, clock synchronization and data availability can be extremely challenging. Thus, having all the relevant data originating from the same time and continuously available at the same time requires an entirely synchronized information network including synchronized data sources. Third, such an arrangement requires all the relevant data sources to function at the same time. Loss of one data source could cause the entire centralized calculation to fail. Fourth, the data must be provided in a compatible format. Adding new hardware using different data formats is frequently not possible without significant effort.

Therefore, it is an object of the present invention to provide a method for the diagnosis of the state of health of wind turbines that overcomes the drawbacks of the prior art. This object is achieved by virtue of a method according to claim 1 for at least partially decentralized calculation of the state of health of at least one wind turbine based on corresponding wind turbine individual data to enable a diagnosis as well as prescriptive information to enable avoidance of occurrence of pre-known specific failure modes, comprising the steps defined in claim 1.

By virtue of this invention it is possible to overcome the above mentioned drawbacks of the prior art by reducing the overall data flow and eliminating the need of time synchronization due to decentralized calculation thus significantly increasing the robustness, the efficiency and the reliability of the state of health calculation.

For example, at a single node the temperatures measured at multiple locations in the wind turbine are available as multiple data streams. In order to predict failure of a specific bearing within the gearbox, it is known that only one of these temperatures is relevant. This temperature is then classified as a prediction critical data source, and the data is subsequently analysed using a specific methodology that is able to detect a relative increase in the level of the temperature with a high degree of accuracy. The calculated relative increase is compared with a threshold value, the level of which is derived statistically based on previous assessment of a large number of turbines with both healthy and unhealthy bearings. If the relative temperature increase is above this threshold value, the bearing is deemed to be operating in a state of "high temperature". This data-reduced state output is then communicated by the node back to the hub, where it may be combined with other state information.

The hub can further comprise a data storage for storing the data-reduced output of the nodes, wherein the data is stored for at least one month and wherein the calculation according to step f) is performed based on the stored data-reduced output of the nodes. Thus, no permanent connectivity is required and time intermitted disconnection of the nodes cannot harm the method. The data transfer does also not need to be synchronous.

Preferably, the calculation of the state of health according to step f) is only performed within a predefined time frame, wherein preferably the time frame amounts to a month. This allows averaging of the data or other the application of other statistical functions. Also, asynchronous calculation is possible.

Preferably, the prediction crucial data comprises technical wind turbine data, wherein a node determines the respective state by comparing the technical wind turbine data that is contained in at least one respective groups with at least one threshold.

Advantageously, each group of the prediction crucial data comprises data of a number of turbines and wherein a threshold is set in dependence of the data of the number of turbines.

Preferably, the hub is configured to communicate with each node in a feedback loop, wherein each node is configured to adjust the threshold levels in dependence of the feedback of the hub.

Advantageously, a node is implemented by virtue of cloud-computing. By alternative, a node can be implemented on an edge computing device.

Preferably, the hub is equipped with a mapping package, said mapping package defining the required format of the data-reduced state output of the nodes.

Advantageously, the system is configured in a way that the event of a mismatch of the format of the data-reduced state output data of the nodes received by the hub with the format required according to the mapping package of the hub leads to non-consideration of this format-wise miss-matched data during step f).

Preferably, the wind turbine relevant data comprises at least one of the following data: {wind turbine vibration monitoring data, wind turbine temperature monitoring data, energy production counters, atmospheric conditions including air temperature, pressure, humidity, wind direction, wind turbulence, grease sampling, lubrication system particle counts, electrical system currents, voltage, power, hydraulic system temperatures, pressures, flow rates, charge pressures, control valve position and activation, endoscopy inspection, the results of visual inspections}

Advantageously, the calculated wind-turbine specific state of health of step f) is used as a basis for a prediction of demand for maintenance of the respective wind turbine.

Preferably, a maintenance routine is automatically triggered based on the prediction of the demand for maintenance

### A more detailed description of ideas of the present invention and of the prior art

### 1. Background

The following invention is designed to allow complex analysis and decision making processes in the domain of predictive maintenance to be solved using a distributed information system.

Expressed in other words, the present invention is suitable to allow individual applications to communicate with each other across networks in a coordinated manner, in order to digitalise complex multistage processes. Each application performs a specific calculation consisting of one or more Metrics which are evaluated, in order to generate Results in a defined format. These Results are then used to determine State information, which can be transferred to a central Hub where logic based reasoning is applied to produce a diagnosis of specific fault conditions and related recommendations.

Specifically, such an information model is highly suitable for application within the field of predictive maintenance. A relevant industry is wind energy, where high cost reduction potential has been identified through the introduction of predictive maintenance in place of more traditional maintenance strategies such as run-to-failure or time-based component exchange.

### 2. Problem Definition

Operators of large fleets of renewable energy assets, for example wind turbines, are faced with a complex challenge in terms of operations and maintenance. Generally, a fleet of turbines will consist of a range of different types, be produced by several different manufacturers, consist of varying configuration, age and operational history. Each individual turbine includes many sub-systems and components, and each is subject to a large number of potential failure mechanisms. In order to maximise operational availability and energy production from the fleet, the operator is required to effectively maintain the fleet despite these challenging boundary conditions.

Typically, an operator of a fleet of wind turbines will have a maintenance strategy already in place, potentially consisting of a mixture of more traditional activities (time-based maintenance, reactive repair) as well as some elements of more advanced condition-based methods. During recent years the high potential for improvements in efficiency combined with reduced costs through the introduction of predictive maintenance has been well published. Furthermore, the emergence of big data analytics and Artificial Intelligence has also contributed to a strong focus on this domain. However, despite such a high level of interest, current approaches to operational data analytics and predictive maintenance supported by Artificial Intelligence have not achieved their full potential. The enclosed invention aims to address several of the limitations of current methodology and to provide a more effective approach to the analysis of operational data, using a distributed information network combined with Augmented Intelligence.

### 3. State-of-the-Art and Limitations

### 3.1 Transition of Existing Processes to Predictive Maintenance

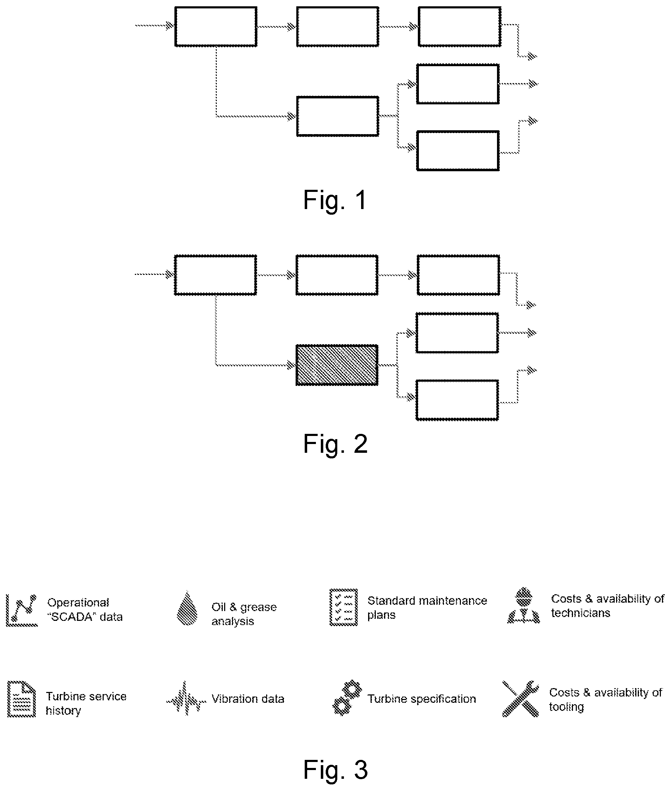

A wind turbine operator wishing to introduce predictive maintenance will typically need to achieve a transition from existing, more traditional processes (time-based, scheduled maintenance) to the desired process. The current process flow may include several activities, each producing input and output information flows which are likely to be partly (but seldomly completely) digitalised. Refer to the simplified schematic in Figure 1.

Based on this baseline situation, a high-level specification for the new, digitalized process can be derived, including identification of specific process steps within the existing process that may be improved through digitalisation - see Figure 2. The potential of new software applications to automate these steps and hence produce a more optimised and highly automated process will then be evaluated. Based on this evaluation, the requirements of the new software will be derived.

Given the need to achieve a transition from an existing state (traditional maintenance) to an improved approach (predictive maintenance) it is almost always a requirement that any new software applications must be able to interface not only with one-another but also with existing digital infrastructure and processes as part of a higher order logical information flow. The sequence of interfacing and the inputs / outputs of each application is strongly dependent on the technical domain (e.g. predictive maintenance of wind turbines). Therefore, it can be highly challenging to support the transitional process described above with standardised, generic software solutions. Often this results in a requirement to completely replace all existing software infrastructure with a new end-to-end solution, resulting in extremely high development and implementation costs. The implementation times for such activities often exceed the lifecycle of the applied software technology, resulting in a need for continuous modification and upgrade of the complete system.

In response to such challenges, specialists with the field of IT and working in the IoT domain are beginning to offer specific analysis tools that can be developed and distributed individually, for example via application marketplaces. Industrial operators can select from a range of applications and add these to their existing infrastructure with a higher degree of flexibility as in the past. Improved connectivity is achieved through advances in standardisation of communication protocols and an increasing adoption of standard interfaces in the form of "APIs".

However, incrementally adding new functionality to an existing system is challenging and often does not ensure that the overall solution is more effective, since it is also critical that the digital workflow process information in the correct order, and that the system finally produces useful outputs. For a subject matter with a high level of complexity such as predictive maintenance, the generation of such workflows in combination with constantly evolving information technologies is extremely challenging.

Digital workflows combining multiple information streams and Applications must be managed by high-level task managers to "orchestrate" the process. Applications must be triggered in a specific sequence, only when required inputs are available and in consideration of dependent organisational processes. This requirement is often extremely difficult to satisfy, resulting in highly complex solutions with low robustness.

### 3.2. Big Data Analytics, AI and Cloud Infrastructure

Software used on the domain of predictive maintenance is typically provided in the form of multiple applications, databases and information management systems, each of which provides a specific functionality. The size, scope and complexity of each individual system may vary greatly.

The underlying hardware is typically provided in the form of virtualised server (either on-premise or cloud-based) with resources separated from the applications by an intermediate abstraction layer (such as a virtual server). Generally, the structure of such systems allows additional hardware resources to be added to the virtualised server on-demand, and applications can be selected from an open or partially controlled marketplace. This provides great flexibility in the setup and scaling of complete solutions.

As described above, digitalised processes such as those related to predictive maintenance typically consist of multiple steps which are connected in a workflow. At each step, input data is collected, processed by a software Application and outputs generated. Finally, decisions are taken based on these outputs; in the case of the Predictive Maintenance domain such decisions typically related to the timing and nature of service tasks that need to be performed and potentially the required tooling, personnel and other resources.

Current practice is strongly focused on the conversion of data into information, insights and decision support through so-called "big data analytics" and AI (Artificial Intelligence). In simple terms. The relationship between available input data and the behaviour of a system subject to an impending fault is derived automatically, using a data driven approach. Typically, all required input data is transferred to a single location (e.g. a specific cloud server) and structured ready for analysis. Examples of data that may be relevant for consideration in such analysis are shown in Figure 3.

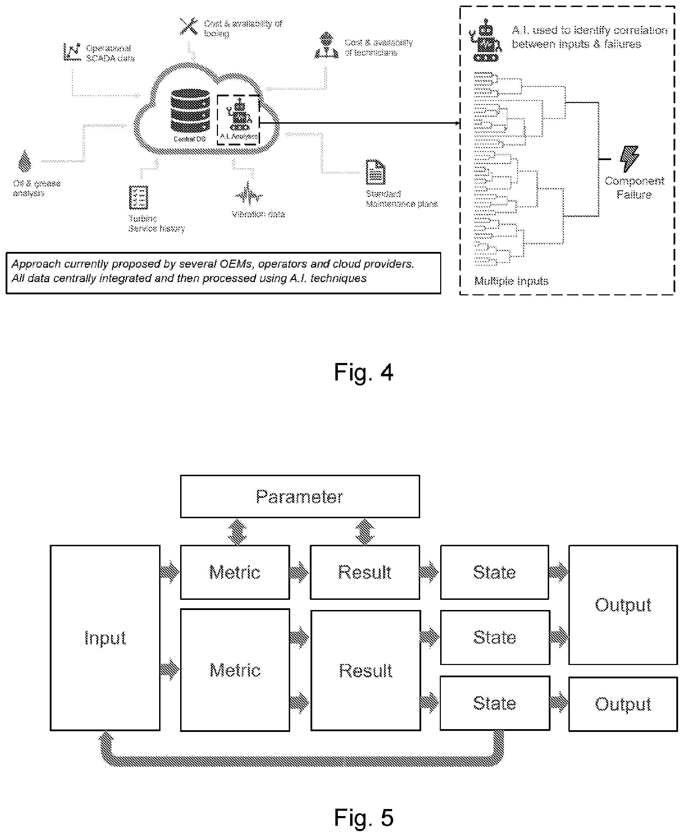

Software applications are installed at the same physical address and then assigned to specific data analysis tasks. In order for supervised or unsupervised AI algorithms to automatically recognise the relationship between a healthy wind turbine and a non-healthy turbine, examples of both must be available in the dataset. Furthermore, all data to be used in the overall diagnosis must be simultaneously. A simplified illustration of this architecture is shown in Figure 4. The AI algorithm will attempt to define specific rules that relate the available input data to the turbine health status, and these rules will be validated and checked for repeatability. Once established, the learned relationships may then be used for monitor data received in the future and to automatically detect and diagnose faulty turbines.

The approach described above is subject to several limitations which inhibit its practical application. These issues are defined as follows:
a. The transfer of all required inputs to a single location often demands that large volumes of data and information must be transferred via networks. This often causes problems due to data security (which can be compromised especially during transfer). In some cases, company policy or legal restrictions may forbid the transfer of data or storage at an alternative location; this barrier is likely to become increasingly relevant in future as concerns over cyber security intensify.
b. Again, due to the need for large volumes of data to be transferred to a central location, a stable network with high bandwidth is typically required. Data driven AI approaches such as neural networks or clustering typically require that all input data is available not only at the same physical location but also synchronously; i.e. a complete analysis tasks will fail if a single input data stream is missing at a specific point in time.
c. The transfer and storing large of volumes of data to cloud servers is typically costly, especially since commercial cloud services typically apply a scalable cost structure which increases in proportion to resource requirements.
d. The proper identification and collection of required data (with appropriate content, resolution, structure) requires a detailed understanding of the technical domain (e.g. predictive maintenance for wind turbines). Furthermore, the development of a complete, centralised storage solution required a-priori knowledge of the complete process that will be implemented. Often at the stage when a data acquisition and storage solution is created, this level of knowledge is not available. Therefore, an iterative approach is often applied; an initial solution is implemented at high effort, initial attempts made to achieve the intended digitalised process, then improvements are made to the system architecture to resolve deficits. This is often highly time consuming and inefficient.

### 4. Optional aspect of the Invention: Augmented Intelligence Process

In order to resolve the limitations described above, a new working process as well as a new information architecture is optionally proposed. In combination, these innovations will enable the effective implementation of a digital solution for the application of predictive maintenance on large scale fleets of wind turbines. Collectively these innovations will be referred to as the "Augmented Intelligence Process".

The key differentiator between the Augmented Intelligence Process and existing data-driven, Artificial Intelligence approach is the application of pre-known domain knowledge in order to identify the required information inputs for analysis (prediction-crucial data), as well as the specific features in the data expected to contain the highest information content. Once these features have been fully defined and mathematically described, computing power may then be used to automate the process of locating and extracting said features from the data. Since the expected information content of the data is identified prior to calculation, the problem can be split into several parts (and later, software applications) with each part dealing with the analysis of a subset of the overall dataset. Therefore, data processing may be decentralised, and only results need to be centralised for the final stage of logical reasoning and the derivation of results and recommendations.

Priority issues relating to the performance and availability of the turbines in the fleet are identified and these issues will then be examined in detail. Specific analysis tasks will be identified, required to provide informed deemed most relevant to the task of performing automated fault detection and diagnosis (i.e. the analysis required to obtain state information). Each analysis task will then be automated using software technology, produced in the form of individual applications. Multiple applications will be deployed and connected via an information network, with each application running on a physical computer, with software potentially separated from hardware through containerisation. Applications that are combined in a single system will commonly be located at multiple locations. Each application will use specific inputs (prediction-crucial data) to generate specific outputs (states), with all outputs transferred to a single, central Node for processing and generation of diagnosis and recommendations. Recommendations are then used as the basis for triggering specific maintenance activities which are carried out on wind turbines to avoid failure or improve performance.

### 4.1. Technical Assessment

- The process begins with a high level assessment of a reference fleet of operational turbines, for which a new augmented Intelligence-based predictive maintenance approach is to be introduced. Historical failures and the resulting costs are assessed in order to identify a short list of priority issues, for which reduction in unplanned failures and hence overall repair costs is a priority target.
- For each of the selected priority issues (e.g. frequent and costly failures in a specific part of the turbine), a detailed technical assessment is performed. The affected systems, components and failure modes are analysed in detail and multi-disciplinary domain knowledge (engineering, physics, material science, service, data science) is applied in order to understand the cause of the historical issues in as much detail as possible.
- For each of the priority issues, a set of historical data is then obtained describing the specification, historical and current operating status of specific wind turbines for which failures of the identified type are known to have occurred. Note that examples of the type of data typically available are shown in Figure 3 earlier. Data is generally selected based on an expectation of relevance for the task of predictive maintenance, again this is based on domain expertise.
- Following a review of the available data and referring to the outcome of the technical assessment, for each issue a methodology is proposed through which the data may be used to predict, detect and / or diagnose any future occurrences of the issue in question. This hypothesis will form the basis of the analytical model and the associated software application(s). The hypothesis is constructed following a strict information model, described in detail in Section 4.2 below.
- In the formulation of the hypothesis, it is important to note that from all of the data available, a subset is selected that is expected to be suitable for use in the prediction, detection and / or diagnosis of the issue in question (i.e. the prediction-crucial data). This selection is made possible through a detailed understanding of the conditions that must be present in order for the issue in question to arise, and also the expected difference in behaviour between a system suffering from the issue in question and a normal, healthy system. These conditions may vary over time, as a specific issue evolves, therefore the data that is relevant for analysis may also evolve over time.
- The result of this assessment will be that the overall task of relating the available input data to the desired output (diagnosis, prognosis) may be divided into several separated sub-tasks. For each sub-task a subset of the overall available input data may be selected as input and used to generate State information. These States are then later recombined and used to produce the final desired fault diagnosis, through the information model described below. The division of the overall volume of input data into sub-sets based on an understanding of the relevant grouping allows a network architecture to be applied, with each sub-task evaluated based on locally stored data, but potentially each sub-task being executed at a unique location. Also, the division of the task into sub-tasks means that sub-tasks may be executed asynchronously, with each sub-task computing Results and State information as soon as the related sub-set of data becomes available. This allows the overall system to provide incremental Output based on whatever information is available at a specific point in time, rather than depending on the availability of all inputs in order to produce any output.

### 4.2. Information Model

- The relationship between available input data and finally the prediction, detection and / or diagnosis of failures in the monitored system is derived through the application of a multi-stage, strict information model. Refer to Figure 5.
- The various components of this model are defined in the table below and the logical relationships between the model components are defined in the succeeding table. Strict adherence to this information model is necessary to ensure that problems broken into several parts (and software applications - see 4.3 below) may nevertheless form components of a complete system.

The following table names components of the information model and definitions thereof:

| **Term** | **Definition** |
|---|---|
| Input | Prediction-crucial data, as per examples provided in Figure 3. |
| Metric | A specific means of classifying the behaviour of a signal, or a mathematical method for extracting specific features expected to be present within the Input data. The output of a Metric is a single Result. |
| Result | A single, scalar value resulting from a specific calculation performed by a software application and based on a Metric. |
| State | One or more observations relating to the operational state and associated with a single Turbine. Several States may be derived from a single Result, and each State is generated when the Results have certain defined properties (e.g. exceeding a threshold level, provided as a Parameter). |
| Parameters | A set of numerical values that may be specific to an individual turbine, a specific turbine type, or generically applicable across all turbines. Parameters may be referenced in the calculation methods used within a Metric and may be modified based on feedback from generated Results. |
| Output | One or more States are combined to produce an Output, which typically consists of a Diagnosis and Prescriptive information. For example, this may be a statement concerning the present or anticipated future state of a specific system within the wind turbine, accompanied by recommended follow-up actions. |

The next table shows defined relationships between pairs of components in the information model:

| **ID** | **Relationship** |
|---|---|
| 1 | N Inputs may be used in 1 Metric |
| 2 | 1 Metric may generate N Results |
| 3 | 1 Result may generate 1 State, based on a defined rule |
| 4 | State rules may include Parameters |
| 5 | N States may be used in 1 Diagnosis |
| 6 | States may be used as Inputs for new Metrics |
| 7 | 1 Metric may call N Parameters for use in calculation |
| 8 | 1 Result may be used to update or modify N Parameters |

- Typically, the outcome of the Technical Assessment described earlier will be mapped onto this information model using a reverse-logic approach. The identified issues (e.g. component failure mechanism) are examined in detail, and the Output is defined as the information required to add value to the wind turbine operator. For example, this may be a statement concerning the probability of failure of the component in future, or a root cause diagnosis describing the detail of the fault and the recommended mitigating action. Once the desired Output has been defined, the States required to arrive at such Output are considered and defined. These States may be derived from specific activities that have taken place at a point in time, observations performed by a human operator, or features extracted automatically from data. Each State is inherently coupled to a Result, in that the State is determined by comparing the Result with some predefined thresholds (fixed values) or Parameters (variables). Metrics are required that perform defined operations based on specific Inputs and generate one or more Results.
- To provide an example, consider the case of an operator suffering from performance losses affecting some turbines in a large fleet. The required Output is, in simple terms, an indication of any turbine that produces less power than it should at the current ambient conditions. The information model may be structured as follows:
   ∘ Output: A statement concerning the magnitude of power loss affecting any particular turbine, and the identification of the affected turbine.
   ∘ State: Turbine operating with a power loss that exceeded a threshold value of X during the last month.
   ∘ Result: Calculated turbine power loss during the last month, compared to the Parameter X (threshold value).
   ∘ Metric: Calculation of turbine power loss as a function of ambient conditions. Results calculation for turbines known to be in healthy condition used to define the Parameter X.
   ∘Input: operational data required to quantify the ambient conditions and the turbine power, e.g. wind speed, air density, measured power, expected power.
- As noted in the example above and also in the previous table that names components of the information model and definitions thereof, Parameters may be used for reference in the determination of the State. A Result is compared with a Parameter, and according to a specific predefined rule, a decision is made as to whether State information should be generated or not. It is important to note that although Results and therefore States are generated at the local level (i.e. close to the Input data, and located on a "Node", see below), the Parameters are available at a global level, i.e. across all Nodes in the system. In fact, Parameters are stored at the Hub where they are continuously updated based on the Results produced at all Nodes across the network. Furthermore, the Parameters can but do not have to be continuously synchronized with all Nodes, so that any calculation performed locally at a Node may refer to these Parameters, in order to define whether State information should be generated or not. Through this approach, a distributed network of analysis tasks may be orchestrated such that the overall system benefits from a compromise between distributed analysis performed close to the data source, together with centralised intelligence that learns from the results of all analysis performed across the network and provides feedback.

### 4.3. Individual Software Applications

- Having generated the information model as described above, software applications are developed that automate the multi-stage task of converting the Input into the required Output. Due to the use of the technical system assessment and the application of domain expertise in the process (as described earlier), the number of Inputs (prediction-crucial data sources) required is finite and their nature is well defined. Therefore, it will also be possible at this stage to identify the likely source and physical location of the prediction-crucial data. The complete information model should then be separated so that each Metric is grouped together with the prediction-crucial data required to calculate that Metric. In some cases, this may result in several groups, resulting from the typically distributed nature of the input data.
- For each group of Metrics, a single software application will be developed. On condition that all required Inputs (prediction-crucial data) are available, and any referenced Parameters are accessible, the application will be capable of performing the calculation as defined by the Metric, generating Results and any related States.
- Through this approach, complex problems dealing with Input data (prediction-crucial data) that is distributed across multiple locations may be partitioned, i.e. separated into several groups with a single software application solving the determination of States for each group. Each application will require only a single interface to the prediction-crucial data as well as access to Parameters. States will be generated which are later combined to produce the Output, as will be described later.

### 4.4. Nodes, Containers and Distribution of Applications

- As described above, one of the key advantages of the Augmented Intelligence process is that each Application may be stored at a location which is as close as possible to the required input information. This avoids completely many of the issues relating to data transfer, cyber security and data ownership described in Section 3.2.
- The software applications are deployed in custom developed "Nodes", each of which provides an environment in which the Apps may operate. Nodes will often by containerised, allowing them to be easily deployed on a range of operating systems connected to either physical or virtualised computing resources. Each Node is connected through a network to a Hub, with which Input and Output information is exchanged (see Section 4.5).
- Each Node includes a Mapping Layer, which will be maintained and regularly updated via synchronisation with a Mapping Package stored at the Hub (see later). The Mapping Layer will have the following characteristics:
   ∘ The Mapping Layer defines a standard format for all inputs as required by the Applications to be placed in Containers (structure, content, naming). Furthermore, the Mapping Layer defines the relationship between all inputs that are anticipated to be provided by the combination of all underlying cloud infrastructure, and the required standard format.

   - The overall scope of all Inputs (potentially multiple data streams) and Outputs (States and Parameters) will grow continuously as additional Applications are created over time, and also as new cloud infrastructures are added to the network, using previously unknown information formats. Therefore, the Mapping Layer must continuously be updated to include the accumulated relationships for all potential combinations of multiple cloud infrastructures and multiple applications. Updates will be performed by a human export, followed by automated updates across the network through regular automated synchronisation between all Nodes and the Mapping Package at the Hub.
- An illustration showing a containerised Node connected to a cloud infrastructure is shown in Figure 6. Multiple turbines may be connected to a single cloud infrastructure allowing large volumes of data to be processed at a single node, as shown in Figure 7. Note also that it is anticipated that Nodes may also be used to process Input data originating from devices other than wind turbines as illustrated in Figure 8 (e.g. mining equipment, vehicles, aircraft etc) as far is these devices produce data that is of relevance to a specific analysis.

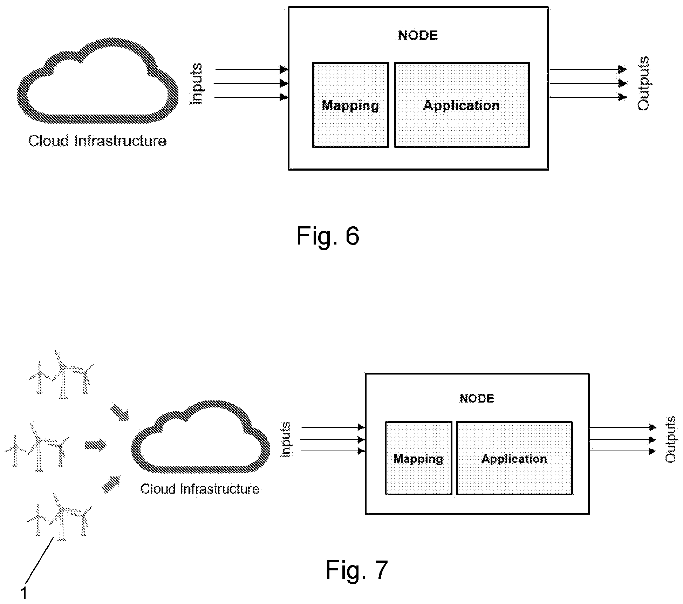

Figure 6 shows software applications that are inserted into a container which provides an interface to the underlying cloud infrastructure, as well as communication with the required Inputs, Outputs and Parameters. This combination of Container, Application and a Mapping Layer is termed a "Node".

Figure 7 shows that a single Node may be used to interface with a cloud server, or platform, containing data gathered from a large number of operational wind turbines. Therefore, high volumes of data may be transferred to the application through a standard interface.

### 4.5. Hub and Information Network

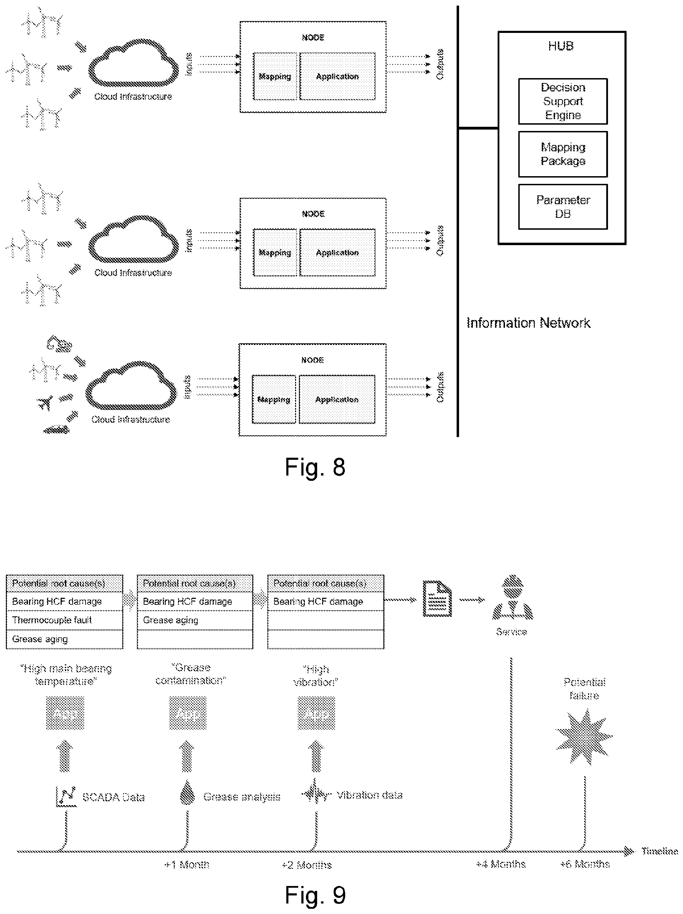

- By applying a technical assessment, creating individual software applications each of which performs a specific analysis using a set of input data to create a defined output (Results, States), complex analysis problems can be split into several parts and executed across several physical locations. Nodes containing one or more applications may be installed and executed on a variety of on-premise computing resources, commercial cloud services, edge devices running on board industrial machinery such as wind turbines or passengers, or even on board smart sensors.
- However, in order to finally generate insights and decision support based on the results of all analysis, it is necessary to transfer the output of all analysis via a network to a central location, where higher order reasoning may be performed. Therefore, the Augmented Intelligence Process includes also a Hub to which all Nodes are connected via an Information Network. Typically, the Hub will consist of a single, relatively complex software application operating on scalable computing resources such as those provided by an industrial computing cloud. The network connecting the Hub to one or more Nodes will typically be the internet. Data originating from multiple fleets of wind turbines may be transferred to the Hub for processing, as well as data from other industrial devices - see Figure 8.
- Information transfer between the Nodes and Hub may be continuous or may be intermittent at defined points in time or triggered by specific conditions. This information transfer will typically be managed by an orchestrator. The Output transferred from the Nodes to the Hub will include Results and States, as defined by the information model (Section 4.2).
- The Hub includes a database for the storage of Parameters. These Parameters provide specific information about the behaviour of devices (e.g. wind turbines) connected to the network and are automatically derived based on the Results generated by one or more software applications in the network. Although the Parameters are generated at the Hub, they are also continuously shared with all Nodes on the network and may be referenced by the Metrics used within the applications.
- A Decision Support Engine located at the Hub is used to combine all States communicated by all Nodes connected to the network and generate higher order outputs in the form of diagnosis, advisory information and decision support - see Section 4.6 below.
- A Mapping Package is stored at Hub as described in 4.4; this package is typically updated regularly by a human operator and automatically synchronised with all Nodes connected to the network. In particular, the Mapping Package can be shared with the Nodes so that Inputs can be mapped.

### 4.6. Reasoning and Decision-Support

- The final output of the Augmented Intelligence Process can be advisory information, used to add value within the context of processes such as predictive maintenance. Given that the initial process steps require the expected results to be defined a-priori as described in Section 4.1, a correctly configured system should produce results that are transparent and can be interpreted by a human and used as the basis for performing optimisation tasks. For example, the system may return a prediction of impending failure of a specific component in a wind turbine and provide details of the recommended preventative repair activities.
- The output is achieved using a Decision Support Engine located at the Hub. The Engine uses logic-based reasoning to derive the relationship between the States supplied by all applications within the network and predefined diagnosis statements. Multiple States, potentially generated by several different applications, may be referenced in a single rule and in case the rule is satisfied, a predefined output is delivered. In some cases, multiple rules may be generated for the same output result, in order to create a flexible system that is tolerant to the absence of individual inputs.
- An example is provided in the table below. Several rules are defined which may be used for the diagnosis of a specific fault case (main bearing failure). A total of three States are referenced in these rules and depending on the number of States available at the time of execution of the Decision Support Engine, the output provides varying levels of precision. Note that in this example the rules refer only to States that must be present for a potential diagnosis to be satisfied. More complex rules may include "AND", "OR", "NOT" statements according to classical Boolean reasoning logic.

The following table shows an example of a set of rules stored at the Hub and used by the Decision Support Engine to convert States to specific statements.

| **Software Application** | **State** | **Diagnosis** | **Recommendation** |
|---|---|---|---|
| SCADA Data Analysis | High main bearing temperature | Bearing HFC Damage OR Thermocouple fault OR Grease aging | Perform grease analysis. Check CMS vibration analysis results. |
| Grease Analysis | High main bearing temperature AND Grease contamination | Bearing HFC Damage OR Grease aging | Check CMS vibration analysis results. |
| Vibration Data Analysis | High main bearing temperature AND Grease contamination AND High vibration | Bearing HFC Damage | Perform endoscope inspection to confirm damage, prepare for component exchange. |

### 4.7. Self-Organising Digital Processes

- As described in Section 3.1, it is often the case that an operator of a fleet of wind turbines wishes to modify an existing maintenance process with the aim of achieving a more highly automated, predictive and process. This evolution is extremely challenging if the sequence of all digital process steps must be explicitly defined. The Augmented Intelligence Process simplifies this problem by allowing the Hub to execute the Decision Support Engine using all States gathered within a specific time period (e.g. 1 month). Within this time period, the sequence with which the States are transmitted to the Hub is not important. Furthermore, if any States required for a specific analysis (e.g. fault diagnosis) are not available for the given time period, this will not affect the ability of the system to perform other analysis for which all required States may be available. Therefore, the decision support process is decoupled from the processes that are executed across the information network, to produce the required input data. In order words, the individual applications located at Nodes and the Decision Support Engine are decoupled and may be executed asynchronously.
- This decoupling allows digital process to develop organically over time without strict workflows, and the output of several process steps may still be effectively combined and used to generate valuable advisory information. A complete a-priori definition of the overall process in advance is no longer necessary, and the information content of the output from analysis performed by the Decision Support Engine may be improved over time, as more information in the form of States becomes available at the Hub. Refer to the illustration and example in Figure 9.

Figure 9: An example showing three separate software applications that have been developed for the purpose of predicting and diagnosing wind turbine main bearing failure. Each application delivers a specific States, but the three States arrive sequentially over a period of 2 months. The Decision Support Engine is able to interpret all three States as part of a single issue and deliver a diagnosis and recommendation to a service technician. As each new State arrives, the level of prevision in the Diagnosis is improved through the use of differential diagnosis to limit the number of possible faults.

### 5. Example Case

A fleet of 30 wind turbines is arranged into 3 wind farms each consisting of 10 wind turbines. A predictive maintenance system is required in order to predict the failure of main bearings, allowing proactive replacement of the component and therefore minimising costs relating to unplanned failure.

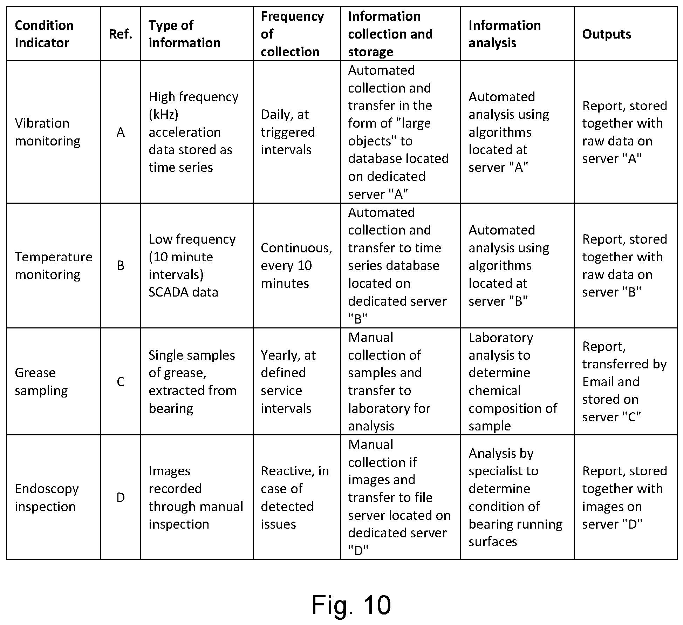

Typically, the condition of a main bearing can be established by considering various different types of information, each with a different structure and each with a different procedure for collection, storage and interpretation of the information. The typical information sources are described in the table according to Figure 10.

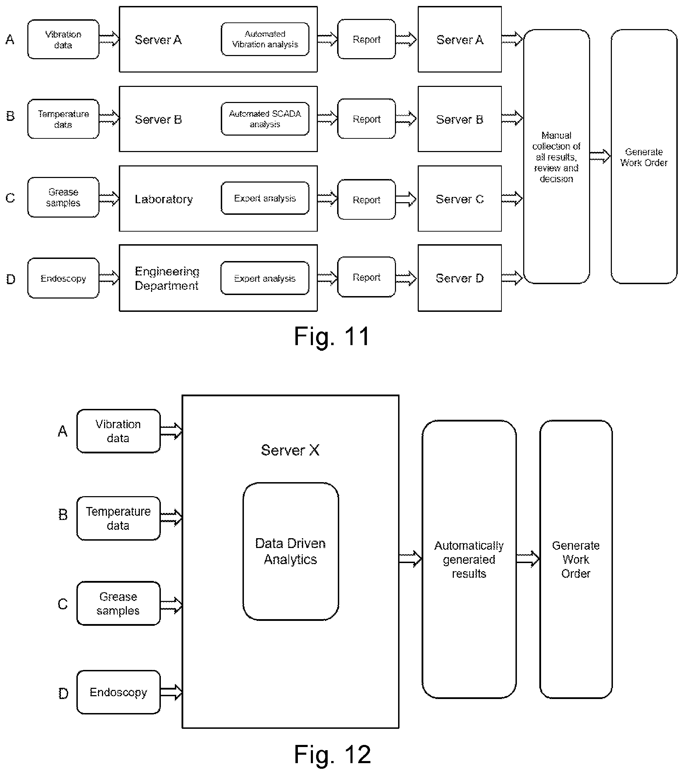

A traditional workflow is shown in Figure 11. Each information source is stored at a separate location, therefore analysis and interpretation are performed independently. The final review, decision making, and follow-up relies on a manual consolidation of the results from the four sources (A through D), manual interpretation and finally the generation of a work order.

In order to remove the element of manual results gathering and consolidation, a more modern "big data" approach supported by AI analytics may be applied, as illustrated in Figure 12.

This approach is subject to all the limitations described in Section 3 above. Through the application of the proposed invention, the following improvements are made:
1. The vibration analysis application for Indicator reference A is moved into a Container, which is stored on the original Server A. Inputs are high frequency acceleration data and outputs are now States, with a standardised format and syntax. These States are automatically by the application and transferred automatically to the Hub, via the central bus.
2. The SCADA analysis application for Indicator reference B is moved into a Container, stored on the original Server B. Inputs are high low frequency SCADA data and outputs are now States, with a standardised format and syntax. These States are automatically by the application and transferred automatically to the Hub, via the central bus.
3. The reports resulting from expert analysis for Indicator reference C are stored in a Container located on the original Server C. The reports are analysed automatically, relevant information extracted and converted into States which are also shared with the Hub, via the central bus.
4. The reports resulting from expert analysis for Indicator reference D are stored in a Container located on the original Server D. The reports are analysed automatically, relevant information extracted and converted into States which are also shared with the Hub, via the central bus
5. A decision support algorithm is created and stored at the Hub. This application is capable of processing the outputs of all four Indicators (references A,B,C,D) and automatically generating a work order with a description of the required actions (for example, replacement of the main bearing on a specific turbine).

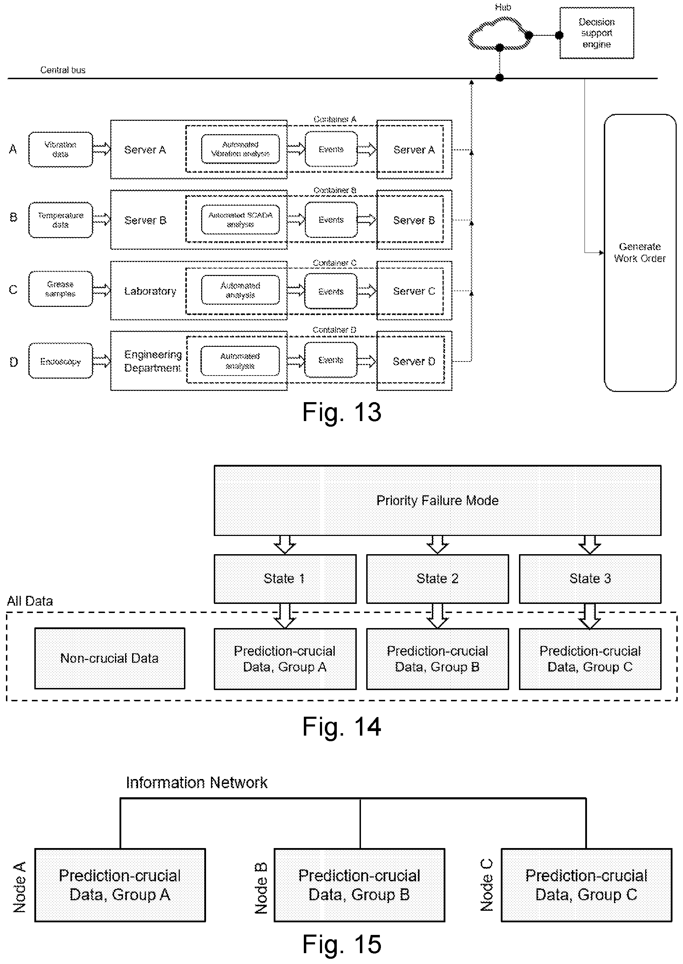

The resulting workflow is shown in Figure 13. Through the use of the Containers combined with the information network illustrated as a central bus, the various components of the overall workflow are connected via the Hub. This is achieved despite the fact that the various Condition Indicators rely on several different underlying servers. Through the addition of the Decision Support Engine, a previously missing process step is added, increasing the level of automation in the overall process.

Figure 13 shows new analysis applications introduced on servers C and D, as well as introduction of Containers on each of the four servers A,B,C,D. Furthermore, a "Decision Support Engine" has been added at the Hub. Due to the connectivity between all Containers and the central bus, information can be shared between all applications and the Hub.

### Brief description of the drawings

In the following, in order to further demonstrate the present invention, illustrative and non-restrictive embodiments are discussed, as shown in the drawings, which show:
- Figure 1: a simplified view of a process such as predictive maintenance, with tasks combined as part of a complete workflow. Each task accepts input information, performs some analysis or manipulation of the information and returns an output.
- Figure 2: following definition of a desired, optimum process a review of IT architecture typically reveals that specific tasks / process steps may be digitalised for improved efficiency (target task shown as shaded box).
- Figure 3: examples of data typically used for the detection and diagnosis of existing or incipient faults in operational wind turbines. Such data is highly inhomogeneous, often relatively unstructured and availability may be interrupted.
- Figure 4: centralised integration of various data types and application of A.I. analytics in order to automatically determine the relationship between the input data and the operational state of each wind turbine in a large fleet.
- Figure 5: Information model used to define the relationship between input data and output result such as a fault diagnosis.
- Figure 6: software Applications are inserted into a container which provides an interface to the underlying cloud infrastructure, as well as communication with the required Inputs, Outputs and Parameters.
- Figure 7: a single Node may be used to interface with a cloud server, or platform, containing data gathered from a large number of operational wind turbines. Note also that it is anticipated that Nodes may also be used to process Input data originating from devices other than wind turbines as illustrated in Figure 8 (e.g. mining equipment, vehicles, aircraft etc) as far is these devices produce data that is of relevance to a specific analysis.
- Figure 8: Complete architecture showing multiple nodes, each containing a single application, combined across multiple cloud servers. Data and information can be uploaded to the cloud servers from multiple devices and transferred to the Hub for use in higher order reasoning.
- Figure 9: an example showing three separate software applications that have been developed for the purpose of predicting and diagnosing wind turbine main bearing failure. Each application delivers a specific State, but the three States arrive sequentially over a period of 2 months. The Decision Support Engine is able to interpret all three States as part of a single issue and deliver a diagnosis and recommendation to a service technician. As each new State arrives, the level of prevision in the Diagnosis is improved through the use of differential diagnosis to limit the number of possible faults.
- Figure 10: Various different condition indicators (Metrics) are considered as part of a predictive maintenance workflow for the wind turbine main bearing.
- Figure 11: A typical workflow for information relating to the monitoring of a wind turbine main bearing, as part of a predictive maintenance process. Four information streams are managed across several servers and finally the results are compared manually leading to a decision.
- Figure 12: Big data approach to main bearing monitoring, with all input data transferred to a central server, X. Data-driven analytics is performed (or "Artificial Intelligence") and results are then generated which form the basis of work orders.
- Figure 13: new analysis applications introduced on servers C and D, as well as introduction of Containers on each of the four servers A,B,C,D. Furthermore, a "Decision Support Engine" has been added at the Hub. Due to the connectivity between all Containers and the central bus, information can be shared between all applications and the Hub.
- Figure 14: through the Augmented Intelligence approach, a priority failure mode is assessed and the State information required to diagnose the failure mode is identified (States 1,2,3). Based on this information, available data may be split into groups of prediction-crucial data, Groups A,B,C.
- Figure 15: A generalised example showing how, for a specific failure mode, all prediction-crucial data that is available across a network can be split into three groups (A,B,C), processed at three physically separated nodes and then recombined through an Informaiton Network.

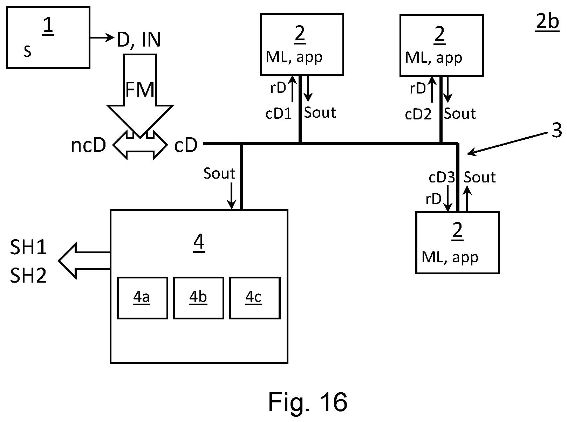

- Figure 16: an overview of the features of the present invention.

### Detailed description of embodiments of the invention

In the following figures identical reference signs refer to identical features unless expressly depicted otherwise.

With reference to the figures, in particular Fig. 16, the present invention will explained once again in the following: Fig. 16 shows a method for at least partially decentralized calculation of the state of health SH1 and SH2 of at least one wind turbine 1 (see also Fig. 7) based on corresponding wind turbine individual data D to enable a diagnosis as well as prescriptive information to enable avoidance of occurrence of pre-known specific failure modes.

This method comprises the following steps a) to f):
a) receiving the wind turbine individual data D and information IN regarding pre-known specific failure modes FM and a corresponding set of states S related thereto in order to separate prediction crucial data cD from non-crucial data ncD, and divide the prediction crucial data cD into groups cD1, cD2, wherein each group cD1, cD2 contains the relevant data rD in order to determine at least one state S,
b) creating a number of decentralized nodes 2, wherein each node 2 is connected to an information network 3 and receives and processes at least one group cD1, cD2 of the prediction crucial data cD, and wherein each node 2 is configured to determine at least one of the states S based on the received group cD1, cD2 of the prediction crucial data cD,
c) wherein each node 2 comprises
   - a mapping layer ML defining requirements regarding the input format of the at least one group cD1, cD2 prediction crucial data cD and defining the format of a data-reduced state output Sout of the node 2, and
   - at least one application app for determining the state S, and providing the determined state S as a data-reduced state output Sout to a hub 4 in step d,
d) connecting the nodes 2 to a hub 4 via the information network 3, wherein the hub 4 comprises a decision support engine 4a,
e) transferring the data-reduced state output Sout of each node 2 to the decision support engine 4a of the hub 4, and
f) using the decision support engine 4a to calculate a wind-turbine specific state of health SH1, SH2 regarding each pre-known specific failure mode FM based on the data-reduced state outputs Sout of the nodes 2 of step e).

Therefore for a specific, priority failure mode FM a diagnosis is produced by the decision support engine 4a, based on prediction-crucial data cD that remains distributed across the network 3. A decentralised approach to data processing has been applied by splitting the analysis task across the nodes 2, and output states Sout are combined at the hub 4 in order to deliver actionable information that can be used be the operator of a fleet of wind turbines in order to perform proactive maintenance on selected turbines, and avoid failures from occurring.

Preferably, the hub 4 is configured to communicate with each node 2 in a feedback loop, wherein each node 2 is configured to adjust the threshold levels in dependence of the feedback of the hub 4. Moreover, the hub 4 is equipped with a mapping package 4c, said mapping package 4c defining the required format of the data-reduced state output Sout of the nodes 2.

The system can be configured to react in the event of a mismatch of the format of the data-reduced state output Sout data of the nodes 2 received by the hub 4 with the format required according to the mapping package 4c of the hub 4, namely by non-consideration of this format-wise miss-matched data during step f.

Preferably, the wind turbine relevant data comprises at least one of the following data (see also Fig. 3): {wind turbine vibration monitoring data, wind turbine temperature monitoring data, energy production counters, atmospheric conditions including air temperature, pressure, humidity, wind direction, wind turbulence, grease sampling, lubrication system particle counts, electrical system currents, voltage, power, hydraulic system temperatures, pressures, flow rates, charge pressures, control valve position and activation, endoscopy inspection, the results of visual inspections}

The calculated wind-turbine specific state of health SH1 and SH2, for instance the condition of a bearing, the generator, the gearbox, oils and grease, control system, electrical conversion system, generator, pitch-drive, yaw-drive of step f) is used as a basis for a prediction of demand for maintenance of the respective wind turbine 1. Preferably, a maintenance routine is automatically triggered based on the prediction of the demand for maintenance.

The provided figures show how a specific process (e.g. wind turbine maintenance) may be assessed (Figure 1) and specific steps identified where optimisation may be achieved through process digitalisation (Figure 2). Such optimisation will often involve the introduction of a new technique for automated fault detection, allowing a transition from traditional, time-based maintenance to predictive maintenance. An example of the types of data typically available to a wind turbine fleet operator is shown in Figure 3, and the traditional "big data" approach to analysis is shown in Figure 4, whereby all data is first centralised prior to execution of data-driven analysis. The information model to be applied in the current invention is shown in Figure 5, and the introduction of a Node including a single analysis application and mapping layer, running on a cloud infrastructure is shown in Figure 6. Data from multiple wind turbines may be gathered and transferred to such a cloud infrastructure as shown in Figure 7. Furthermore multiple nodes, at each of which data may be combined from multiple sources (e.g. wind turbine, aircraft, vehicle...) may be connected via an information network, and also connected to a Hub as shown in Figure 8. Analysis tasks may be distributed across such a network, with specific applications responsible for interpreting prediction-crucial data available at each of the connected nodes, generating data-reduced state outputs which may be combined to produce advisory information which is subsequently transferred to a service technician, as shown in Figure 9. A specific example of multiple condition indicators (prediction-crucial data) that may be available for fault detection in a wind turbine main bearing is shown in Figure 10. A traditional workflow is shown in Figure 11, including manually steps for diagnosing the fault. In Figure 12 the "big data" approach is depicted, whereby all data is combined centrally prior to performing data-driven analysis. The preferred approach defined within the present invention is shown in Figure 13, with analysis performed across multiple locations (nodes) and the state output combined at a hub for final processing. Figure 14 illustrates how data for a specific, priority failure mode can be divided into groups of prediction-crucial data based on a definition of the relevant state information needed to perform the final diagnosis. These groups of prediction-crucial data can be processed at physically separated nodes, which are connected via an information network as shown in Figure 15. The overall information model and architecture is depicted in Figure 16.

Of course, the invention is not limited to the examples given in this specification. Also, as long as not expressively excluded all the features of the invention can be freely combined. The reference numerals are only for informational purpose and do not delimit the scope of protection.

## Claims

1. Method for at least partially decentralized calculation of the state of health (SH1, SH2) of at least one wind turbine (1) based on corresponding wind turbine individual data (D) to enable a diagnosis as well as prescriptive information to enable avoidance of occurrence of pre-known specific failure modes (FM), comprising the following steps:
a) receiving the wind turbine individual data (D) and information (IN) regarding pre-known specific failure modes (FM) and a corresponding set of states (S) related thereto and among the received data separating prediction crucial data (cD) from non-crucial data (ncD), and dividing the prediction crucial data (cD) into groups (cD1, cD2), wherein each group (cD1, cD2) contains the relevant data (rD) in order to determine at least one state (S),
b) creating a number of at least two decentralized nodes (2), wherein each node (2) is connected to an information network (3) and receives and processes at least one group (cD1, cD2) of the prediction crucial data (cD), and wherein each node (2) is configured to determine at least one of the states (S) based on the received group (cD1, cD2) of the prediction crucial data (cD),
c) wherein each node (2) comprises
- a mapping layer (ML) defining requirements regarding the input format of the at least one group (cD1, cD2) of prediction crucial data (cD) and defining the format of a data-reduced state output (Sout) of the node (2), and
- at least one application (app) for determining the state (S), and providing the determined state (S) as a data-reduced state output (Sout) to a hub (4) in step d),
d) connecting the at least two nodes (2) to a hub (4) via the information network (3), wherein the hub (4) comprises a decision support engine (4a),
e) transferring the data-reduced state output (Sout) of each node (2) to the decision support engine (4a) of the hub (4), and
f) using the decision support engine (4a) to calculate a wind-turbine specific state of health (SH1, SH2) regarding each pre-known specific failure mode (FM) based on the data-reduced state outputs (Sout) of the at least two nodes (2) of step e).

2. Method according to claim 1, wherein the hub (4) further comprises a data storage (4b) for storing the data-reduced output (Sout) of the at least two nodes (2), wherein the data (Sout) is stored for at least one month and wherein the calculation according to step f) is performed based on the stored data-reduced output (Sout) of the at least two nodes (2).

3. Method according to claim 1 or 2, wherein the calculation of the state of health (SH1, SH2) according to step f) is only performed within a predefined time frame, wherein preferably the time frame amounts to a month.

4. Method according to any of the preceding claims, wherein the prediction crucial data (cD) comprises technical wind turbine data, wherein a node (2) determines the respective state (S) by comparing the technical wind turbine data that is contained in at least one respective groups (cD1, cD2, cD3) with at least one threshold.

5. Method according to claim 4, wherein each group (cD1, cD2, cD3) of the prediction crucial data (cD) comprises data of a number of turbines and wherein a threshold is set in dependence of the data of the number of turbines.

6. Method according to claim 5, wherein the hub (4) is configured to communicate with each node (2) in a feedback loop, wherein each node (2) is configured to adjust the threshold levels in dependence of the feedback of the hub (4).

7. Method according to any of the preceding claims, wherein a node (2) is implemented by virtue of cloud-computing.

8. Method according to any of the preceding claims, wherein a node (2) is implemented on an edge computing device.

9. Method according to any of the preceding claims, wherein the hub (4) is equipped with a mapping package (4c), said mapping package (4c) defining the required format of the data-reduced state output (Sout) of the at least two nodes (2).

10. Method according to claim 9, wherein in the event of a mismatch of the format of the data-reduced state output (Sout) data of the at least two nodes (2) received by the hub (4) with the format required according to the mapping package (4c) of the hub (4) leads to non-consideration of this format-wise miss-matched data during step f).

11. Method according to any of the preceding claims, wherein wind turbine relevant data comprises at least one of the following data: {wind turbine vibration monitoring data, wind turbine temperature monitoring data, energy production counters, atmospheric conditions including air temperature, pressure, humidity, wind direction, wind turbulence, grease sampling, lubrication system particle counts, electrical system currents, voltage, power, hydraulic system temperatures, pressures, flow rates, charge pressures, control valve position and activation, endoscopy inspection, the results of visual inspections}

12. Method according any of the preceding claims, wherein the calculated wind-turbine specific state of health (SH1, SH2) of step f) is used as a basis for a prediction of demand for maintenance of the respective wind turbine.

13. Method according to claim 12, wherein a maintenance routine is automatically triggered based on the prediction of the demand for maintenance.

## Patentansprüche

1. Verfahren zur zumindest teilweise dezentralen Berechnung des Gesundheitszustands (SH1, SH2) mindestens einer Windkraftanlage (1) auf der Grundlage entsprechender anlagenspezifischer Daten (D), um eine Diagnose sowie Handlungsempfehlungen zur Vermeidung des Auftretens bekannter spezifischer Ausfallmodi (FM) zu ermöglichen, umfassend die folgende Schritte:
a) Empfangen der windkraftanlagen-spezifischen Daten (D) und von Informationen (IN) bezüglich vorab bekannter spezifischer Ausfallmodi (FM) sowie eines entsprechenden Satzes von damit verbundenen Zuständen (S) und Trennen von für die Vorhersage entscheidenden Daten (cD) von nicht entscheidenden Daten (ncD) aus den empfangenen Daten sowie Unterteilen der für die Vorhersage entscheidenden Daten (cD) in Gruppen (cD1, cD2), wobei jede Gruppe (cD1, cD2) die relevanten Daten (rD) enthält, um mindestens einen Zustand (S) zu bestimmen,
b) Erzeugen einer Anzahl von mindestens zwei dezentralen Knoten (2), wobei jeder Knoten (2) mit einem Informationsnetzwerk (3) verbunden ist und mindestens eine Gruppe (cD1, cD2) der für die Vorhersage entscheidenden Daten (cD) empfängt und verarbeitet, und wobei jeder Knoten (2) so konfiguriert ist, dass er mindestens einen der Zustände (S) auf der Grundlage der empfangenen Gruppe (cD1, cD2) der für die Vorhersage entscheidenden Daten (cD) bestimmt,
c) wobei jeder Knoten (2) umfasst:
- eine Mapping-Schicht (ML), die Anforderungen hinsichtlich des Eingabeformats der mindestens einen Gruppe (cD1, cD2) von für die Vorhersage entscheidenden Daten (cD) definiert und das Format einer datenreduzierten Zustandsausgabe (Sout) des Knotens (2) festlegt, und
- mindestens eine Anwendung (app) zur Bestimmung des Zustands (S) und zur Bereitstellung des bestimmten Zustands (S) als datenreduzierte Zustandsausgabe (Sout) an einen Hub (4) in Schritt d),
d) Verbinden der mindestens zwei Knoten (2) mit einem Hub (4) über das Informationsnetzwerk (3), wobei der Hub (4) eine Entscheidungsunterstützungs-Engine (4a) umfasst,
e) Übertragen der datenreduzierten Zustandsausgabe (Sout) jedes Knotens (2) an die Entscheidungsunterstützungs-Engine (4a) des Hubs (4), und
f) Verwenden der Entscheidungsunterstützungs-Engine (4a) zum Berechnen eines windturbinenspezifischen Zustands (SH1, SH2) in Bezug auf jeden vorab bekannten spezifischen Ausfallmodus (FM) auf der Grundlage der datenreduzierten Zustandsausgaben (Sout) der mindestens zwei Knoten (2) aus Schritt e).

2. Verfahren nach Anspruch 1, wobei der Hub (4) ferner einen Datenspeicher (4b) zum Speichern der datenreduzierten Ausgabe (Sout) der mindestens zwei Knoten (2) umfasst, wobei die Daten (Sout) für mindestens einen Monat gespeichert werden und wobei die Berechnung gemäß Schritt f) auf der Grundlage der gespeicherten datenreduzierten Ausgabe (Sout) der mindestens zwei Knoten (2) durchgeführt wird.

3. Verfahren nach Anspruch 1 oder 2, wobei die Berechnung des Zustands (SH1, SH2) gemäß Schritt f) nur innerhalb eines vordefinierten Zeitraums durchgeführt wird, wobei der Zeitraum vorzugsweise einen Monat beträgt.

4. Verfahren nach einem der vorstehenden Ansprüche, wobei die für die Vorhersage entscheidenden Daten (cD) technische Windkraftanlagendaten umfassen, wobei ein Knoten (2) den jeweiligen Zustand (S) bestimmt, indem er die in mindestens einer der jeweiligen Gruppen (cD1, cD2, cD3) enthaltenen technischen Windkraftanlagendaten mit mindestens einem Schwellenwert vergleicht.

5. Verfahren nach Anspruch 4, wobei jede Gruppe (cD1, cD2, cD3) der für die Vorhersage entscheidenden Daten (cD) Daten einer Anzahl von Windkraftanlagen umfasst und wobei ein Schwellenwert in Abhängigkeit von den Daten der Anzahl von Windkraftanlagen festgelegt wird.

6. Verfahren nach Anspruch 5, wobei der Hub (4) so konfiguriert ist, dass er mit jedem Knoten (2) in einer Rückkopplungsschleife kommuniziert, wobei jeder Knoten (2) so konfiguriert ist, dass er die Schwellenwerte in Abhängigkeit von der Rückmeldung des Hubs (4) anpasst.

7. Verfahren nach einem der vorstehenden Ansprüche, wobei ein Knoten (2) mittels Cloud-Computing implementiert ist.

8. Verfahren nach einem der vorstehenden Ansprüche, wobei ein Knoten (2) auf einem Edge-Computing-Gerät implementiert ist.

9. Verfahren nach einem der vorstehenden Ansprüche, wobei der Hub (4) mit einem Mapping-Paket (4c) ausgestattet ist, wobei das Mapping-Paket (4c) das erforderliche Format der datenreduzierten Zustandsausgabe (Sout) der mindestens zwei Knoten (2) definiert.

10. Verfahren nach Anspruch 9, wobei im Falle einer Nichtübereinstimmung des Formats der vom Hub (4) empfangenen Daten des datenreduzierten Zustands (Sout) der mindestens zwei Knoten (2) mit dem gemäß dem Mapping-Paket (4c) des Hubs (4) erforderlichen Format dazu führt, dass diese formatmäßig nicht übereinstimmenden Daten während des Schritts f) nicht berücksichtigt werden.

11. Verfahren nach einem der vorstehenden Ansprüche, wobei die windkraftanlagenrelevanten Daten mindestens eine der folgenden Daten umfassen: {Windkraftanlagen-Schwingungsüberwachungsdaten, Windkraftanlagen-Temperaturüberwachungsdaten, Energieerzeugungszähler, atmosphärische Bedingungen einschließlich Lufttemperatur, Druck, Luftfeuchtigkeit, Windrichtung, Windturbulenz, Fettprobenahme, Partikelzählungen des Schmiersystems, Ströme, Spannung und Leistung des elektrischen Systems, Temperaturen, Drücke, Durchflussraten und Ladedrücke des Hydrauliksystems, Position und Aktivierung von Regelventilen, endoskopische Inspektion, Ergebnisse von Sichtprüfungen}

12. Verfahren nach einem der vorstehenden Ansprüche, wobei der berechnete windkraftanlagenspezifische Gesundheitszustand (SH1, SH2) aus Schritt f) als Grundlage für eine Vorhersage des Wartungsbedarfs der jeweiligen Windkraftanlage verwendet wird.

13. Verfahren nach Anspruch 12, wobei auf der Grundlage der Vorhersage des Wartungsbedarfs automatisch eine Wartungsroutine ausgelöst wird.

## Revendications

1. Procédé de calcul au moins partiellement décentralisé de l'état de santé (SH1, SH2) d'au moins une éolienne (1) sur la base de données individuelles correspondantes (D) de l'éolienne, afin de permettre un diagnostic ainsi que de fournir des informations prescriptives permettant d'éviter la survenue de modes de défaillance spécifiques (FM) connus à l'avance, comprenant les étapes suivantes :
a) recevoir les données individuelles de l'éolienne (D) et des informations (IN) concernant des modes de défaillance spécifiques connus à l'avance (FM) ainsi qu'un ensemble correspondant d'états (S) qui y sont liés, et, parmi les données reçues, séparer les données cruciales pour la prédiction (cD) des données non cruciales (ncD), et diviser les données cruciales pour la prédiction (cD) en groupes (cD1, cD2), chaque groupe (cD1, cD2) contient les données pertinentes (rD) afin de déterminer au moins un état (S),
b) créer au moins deux nœuds décentralisés (2), chaque nœud (2) étant connecté à un réseau d'information (3) et recevant et traitant au moins un groupe (cD1, cD2) de données cruciales pour la prédiction (cD), et chaque nœud (2) étant configuré pour déterminer au moins l'un des états (S) sur la base du groupe reçu (cD1, cD2) de données cruciales pour la prédiction (cD),
c) dans lequel chaque nœud (2) comprend
- une couche de mappage (ML) définissant les exigences relatives au format d'entrée du ou des groupes (cD1, cD2) de données essentielles à la prédiction (cD) et définissant le format d'une sortie d'état à données réduites (Sout) du nœud (2), et
- au moins une application (app) pour déterminer l'état (S) et fournir l'état déterminé (S) sous forme de sortie d'état à données réduites (Sout) à un concentrateur (4) à l'étape d),
d) connecter les au moins deux nœuds (2) à un concentrateur (4) via le réseau d'information (3), le concentrateur (4) comprenant un moteur d'aide à la décision (4a),
e) transférer la sortie d'état à données réduites (Sout) de chaque nœud (2) vers le moteur d'aide à la décision (4a) du concentrateur (4), et
f) utiliser le moteur d'aide à la décision (4a) pour calculer un état de santé spécifique à l'éolienne (SH1, SH2) concernant chaque mode de défaillance spécifique (FM) connu à l'avance, sur la base des sorties d'état à données réduites (Sout) des au moins deux nœuds (2) de l'étape e).

2. Procédé selon la revendication 1, dans lequel le concentrateur (4) comprend en outre une mémoire de données (4b) destinée à stocker les sorties de données réduites (Sout) des au moins deux nœuds (2), dans lequel les données (Sout) sont stockées pendant au moins un mois et dans lequel le calcul selon l'étape f) est effectué sur la base des sorties de données réduites (Sout) stockées des au moins deux nœuds (2).

3. Procédé selon la revendication 1 ou 2, dans lequel le calcul de l'état de santé (SH1, SH2) selon l'étape f) n'est effectué que dans un intervalle de temps prédéfini, cet intervalle de temps s'étendant de préférence sur un mois.

4. Procédé selon l'une quelconque des revendications précédentes, dans lequel les données cruciales pour la prévision (cD) comprennent des données techniques relatives aux éoliennes, dans lequel un nœud (2) détermine l'état respectif (S) en comparant les données techniques relatives aux éoliennes contenues dans au moins un groupe respectif (cD1, cD2, cD3) avec au moins un seuil.

5. Procédé selon la revendication 4, dans lequel chaque groupe (cD1, cD2, cD3) des données cruciales pour la prévision (cD) comprend des données relatives à un certain nombre d'éoliennes et dans lequel un seuil est défini en fonction des données relatives au nombre d'éoliennes.

6. Procédé selon la revendication 5, dans lequel le concentrateur (4) est configuré pour communiquer avec chaque nœud (2) dans une boucle de rétroaction, chaque nœud (2) étant configuré pour ajuster les niveaux de seuil en fonction de la rétroaction du concentrateur (4).

7. Procédé selon l'une quelconque des revendications précédentes, dans lequel un nœud (2) est mis en œuvre au moyen du cloud computing.

8. Procédé selon l'une quelconque des revendications précédentes, dans lequel un nœud (2) est mis en œuvre sur un dispositif de calcul en périphérie.

9. Procédé selon l'une quelconque des revendications précédentes, dans lequel le concentrateur (4) est équipé d'un module de mappage (4c), ledit module de mappage (4c) définissant le format requis de la sortie d'état à données réduites (Sout) des au moins deux nœuds (2).

10. Procédé selon la revendication 9, dans lequel, en cas de non-correspondance entre le format des données de sortie en état de réduction (Sout) des au moins deux nœuds (2) reçues par le concentrateur (4) et le format requis selon le module de mappage (4c) du concentrateur (4), ces données dont le format ne correspond pas ne sont pas prises en compte lors de l'étape f).

11. Procédé selon l'une quelconque des revendications précédentes, dans lequel les données relatives à l'éolienne comprennent au moins l'une des données suivantes : {données de surveillance des vibrations de l'éolienne, données de surveillance de la température de l'éolienne, compteurs de production d'énergie, conditions atmosphériques comprenant la température de l'air, la pression, l'humidité, la direction du vent, la turbulence du vent, l'échantillonnage de graisse, le comptage de particules du système de lubrification, les courants, la tension et la puissance du système électrique, les températures, pressions, débits et pressions de charge du système hydraulique, la position et l'activation des vannes de régulation, l'inspection par endoscopie, les résultats des inspections visuelles}

12. Procédé selon l'une quelconque des revendications précédentes, dans lequel l'état de santé spécifique à l'éolienne (SH1, SH2) calculé à l'étape f) est utilisé comme base pour une prévision des besoins en maintenance de l'éolienne concernée.

13. Procédé selon la revendication 12, dans lequel une routine de maintenance est automatiquement déclenchée sur la base de la prévision des besoins en maintenance.
